# EUROPEAN PATENT APPLICATION

(11) **EP 3 734 383 A1**
(43) Date of publication of application: **04.11.2020**
(21) Application number: 19172573.8
(22) Date of filing: 03.05.2019
(51) Int. Cl.: G05B 19/418

(54) **METHOD FOR COMMUNICATION IN A MACHINE TOOL SYSTEM AND A COMMUNICATION SYSTEM THEREFOR**

(71) Applicant: AB Sandvik Coromant, 811 81 Sandviken (SE)
(72) Inventor: HOLMSTRÖM, Tennerth, SE-269 92 Båstad (SE)
(74) Representative: Sandvik

(57) **Abstract**

The disclosure relates to a method for communication in a machine tool system. The machine tool system comprises a Programmable Logic Controller, PLC, a Numerical Control, NC, and a control node, wherein the control node and the NC are configured to exchange data signals with each other. The method comprises transmitting a data signal, comprising an action request which comprises an acknowledgment indication, from the control node to the NC; triggering, in the NC, an action to be performed in the machine tool system based on the received action request, and sending, from the NC to the control node, an acknowledgement ACK data signal if required by the acknowledgement indication.

## Description

### TECHNICAL FIELD

The present disclosure relates to a method for communication in a machine tool system and to a communication system for performing the method.

### BACKGROUND

Computer Numerical Control (CNC) is widely used for controlling machine tools made for manufacturing, both additive and subtractive, wherein operations such as drilling, milling, turning, reaming, threading or grinding are common. A CNC machine alters materials, for example, metal, plastic, wood, ceramic, or composite etc. to meet precise specifications by following programmed instructions and without a manual operator. In general, a CNC comprises at least one Numerical Control (NC) that controls numerical programmed motions and one Programmable Logic Controller (PLC) controlling logical based functions.

Nowadays, in CNC systems, the design of a mechanical part and its manufacturing program is highly automated. The mechanical dimensions of the part are defined using CAD software, and then translated into manufacturing directives by Computer Aided Manufacturing (CAM) software. The resulting directives are transformed by "post processor" software into specific commands necessary for a particular machine to produce the component, and then loaded into the CNC machine. To summarize, CNC machines combine a motorized maneuverable tool and often a motorized maneuverable workpiece, which are both controlled by a NC, according to specific input instructions. Instructions are typically delivered to a CNC machine in a form of G-codes generated by a graphical Computer Aided Manufacturing (CAM) software, and executed in the NC as sequential programs.

The communication between the NC and the PLC is mainly located inside the machine tool system. The communication is for example established on a wired or wireless Time Sensitive Networks (TSN), such as PROFINET, Ethernet/IP or Process Field Bus (PROFIBUS). PROFIBUS, as an example, is a master-slave type protocol with an additional token ring protocol to allow for multiple masters. All devices go through a startup sequence during which they "join" the network. Each slave maintains a failsafe timer. If the master does not talk to the slave within a certain time limit, the slave goes into a safe state; the master must then go through the startup sequence again before further data exchange can occur. This, in combination with a watchdog timer in the master, ensures that all communication occurs every bus cycle with a certain time value. Therefore, the packets sent on PROFIBUS cannot be lost without the awareness of the sender. Thus, the communication established on the PROFIBUS has a mechanism for security. However, with the development of technology and the change of user's needs, the communication needs to be extended outside of the machine tool system. In such case, the communication systems of today cannot meet the needs. The security of the communication data is also an important aspect to take into consideration.

### SUMMARY

It is an object of the disclosure to address at least some of the problems and issues outlined above. One object of the present disclosure is to provide a method and a system for communication in a machine tool system.

Another object is to provide a control node, and a method performed at a control node for communication with a NC in a machine tool system.

Yet another object is to provide a NC, and a method performed at a NC for communication with a control node in a machine tool system.

Yet another object is to provide a Programmable Logic Controller, and a method performed at a Programmable Logic Controller for communication in a machine tool system.

Yet another object is to provide a computer program product comprising computer-readable instructions, which, when executed on a computer, performs a method for communication in a machine tool system.

The above objectives are wholly or partially achieved by methods and systems according to the appended claims. Features and aspects are set forth in the appended claims, in the following description, and in the annexed drawings of the present disclosure.

According to a first aspect, there is provided a method for communication in a machine tool system, wherein the machine tool system comprises a Numerical Control (NC) and a control node, wherein the control node and the NC are configured to exchange data signals with each other, wherein the method comprises the steps of transmitting, from the control node to the NC, a data signal comprising an action request which comprises an acknowledgment indication; triggering, in the NC, an action to be performed in the machine tool system based on the received action request, and sending, from the NC to the control node, an acknowledgement ACK data signal if required by the acknowledgement indication.

In an exemplary embodiment, the machine tool system comprises a Programmable Logic Controller, PLC, which comprises an interface configured to relay data signals between the control node and the NC.

In another exemplary embodiment, the acknowledgement ACK data signal comprises data indicating that the action is active, and the method further comprises resetting the action request, at the control node, after receiving the acknowledgement ACK data signal.

In yet another exemplary embodiment, the method further comprising resetting the action request after a predetermined period, if the acknowledgement indication does not require the acknowledgement ACK data signal.

In yet another exemplary embodiment, the action request comprises an action type identifying an action to be performed and an action value instructing the way the action is to be executed, the method further comprising setting the action value before setting the action type.

In yet another exemplary embodiment, the control node and the NC are further configured to exchange a status request.

In yet another exemplary embodiment, the status request relates to at least one of: changing parameters of a working state of a cutting tool connected to the machine tool system, a working state of the cutting tool, or a working state of a machine tool.

According to a second aspect, there is provided a machine tool system comprising: a NC; and a control node; the control node and the NC are configured to exchange data signals with each other wherein the machine tool system is configured to cause: the control node to transmit a data signal to the NC, the data signal comprising an action request which comprises an acknowledgment indication; the NC to trigger an action to be performed in the machine tool system based on the received action request, and the NC to send an acknowledgement ACK data signal to the control node if required by the acknowledgement indication.

In an exemplary embodiment, the action request includes an action type identifying an action to be performed and an action value instructing the way the action is to be executed, wherein the action value is set before the action type.

In another exemplary embodiment, the data signal further comprises a status request.

In yet another exemplary embodiment, the status request relates to at least one of: changing parameters of a working state of a cutting tool connected to the machine tool system, a working state of the cutting tool, or a working state of a machine tool.

According to a third aspect, there is provided a method performed at a control node for communication with a Numerical Control NC in a machine tool system, comprising the steps of: transmitting a first data signal to the NC , the data signal including an indication whether an acknowledgement ACK data signal is required or not; receiving, from the NC, an acknowledgement ACK data signal if the first data signal requires an acknowledgement; and transmitting a second data signal to the NC when the acknowledgement ACK data signal has been received by the control node, or, if the first data signal does not require an acknowledgement, after a predefined period.

According to a fourth aspect, there is provided a method performed at a Numerical control NC for communication with a control node in a machine tool system, comprising the steps of: receiving a first data signal from the control node, the data signal including an indication whether an acknowledgement ACK data signal is required or not; sending an acknowledgement ACK data signal to the control node if the first data signal requires an acknowledgement; and receiving a second data signal from the control node.

According to a fifth aspect, there is provided a method performed at a Programmable Logic Controller (PLC) for communication in a machine tool system, wherein the machine tool system comprises the Programmable Logic Controller PLC, a Numerical Control NC and a control node, wherein the PLC comprises an interface configured to relay data signals between the control node and the NC, comprising the steps of receiving, from a sending node, a data signal including an indication whether an acknowledgement ACK data signal is required or not; relaying the data signal to a receiving node and, if the data signal requires an acknowledgement: receiving an acknowledgement ACK data signal from the receiving node, and relaying the acknowledgement ACK data signal to the sending node, wherein, if the sending node is the control node, the receiving node is the NC, and if the sending node is the NC, the receiving node is the control node.

According to a sixth aspect, there is provided a control node for communication with a Numerical Control NC in a machine tool system, wherein the control node is configured with a transmitting unit and a receiving unit, wherein the transmitting unit is configured to transmit a first data signal to the NC, the data signal including an indication whether an acknowledgement ACK data signal is required or not, the receiving unit is configured to receive, from the NC, an acknowledgement ACK data signal if the first data signal requires an acknowledgement, and the transmitting unit is further configured to transmit a second data signal to the NC when the acknowledgement ACK data signal has been received by the control node, or, if the first data signal does not require an acknowledgement, after a predefined period.

According to a seventh aspect, there is provided a Numerical Control NC for communication with a control node in a machine tool system, wherein the NC is configured with a NC transmitting unit and a NC receiving unit, wherein the NC receiving unit is configured to receive a first data signal from the control node, the data signal including an indication whether an acknowledgement ACK data signal is required or not, the NC transmitting unit is configured to send an acknowledgement ACK data signal to the control node if the first data signal requires an acknowledgement, and the NC receiving unit is further configured to receive a second data signal from the control node.

According to an eighth aspect, there is provided a Programmable Logic Controller PLC for communication in a machine tool system, wherein the machine tool system comprises the Programmable Logic Controller PLC, a Numerical Control NC and a control node, wherein the PLC is configured with a PLC receiving unit and an interface configured to relay data signals between the control node and the NC, wherein the PLC receiving unit is configured to receive, from a sending node, a data signal including an indication whether an acknowledgement ACK data signal is required or not; the interface is configured to relay the data signal to a receiving node, and, if the data signal requires an acknowledgement, the PLC receiving unit is further configured to receive an acknowledgement ACK data signal from the receiving node, and the interface is further configured to relay the acknowledgement ACK data signal to the sending node, wherein, if the sending node is the control node, the receiving node is the NC, and if the sending node is the NC, the receiving node is the control node.

According to a ninth aspect, there is provided a computer program product comprising computer-readable instructions which, when executed on a computer, performs a method according to the above.

The present disclosure provides a solution for extending the communication between the control node and the NC outside the CNC controlled machine tool without risk of losing data signals. Furthermore, an enhanced connectivity between the NC, the PLC and the control node is also provided, even a plug and play environment is possible for the end customer. This present disclosure creates customer value in an open and customizable environment, providing tremendous flexibility. Another advantage is that the NC in the machine tool system can process data signals from the control node much faster than conventional systems and the efficiency of the system has been significantly improved.

### BRIEF DESCRIPTION OF THE DRAWINGS

Several aspects of the disclosure can be better understood with reference to the following drawings. In the drawings, like reference numerals designate corresponding parts throughout the several views.
Fig. 1 is a block diagram illustrating an overview of the machine tool system.
Fig.2 illustrates the communication between the control node and the NC.
Figs. 3A, 3B and 3C show a flowchart of an exemplary method performed by the system.
Fig. 4 is a flowchart illustrating an exemplary method performed by the system.
Fig.5 illustrates a diagram of an ACK Action Request without interrupt to the NC.
Fig.6 is a flowchart illustrating a subroutine of "TO NC ACK ACTION".
Fig.7 illustrates an exemplary structure of action request and action acknowledgement.
Fig. 8 illustrates a diagram of an ACK Action Request to the PLC.
Fig. 9 is a flowchart illustrating a subroutine of "TO PLC ACK ACTION".
Fig. 10 illustrates a diagram of an ACK Action Request from the PLC.
Fig. 11 is a flowchart illustrating a subroutine of "FROM PLC ACK ACTION".
Fig. 12 illustrates a diagram of an ACK Action Request from the NC.
Fig. 13 is a flowchart illustrating a subroutine of "FROM NC ACK ACTION".
Fig. 14 illustrates a diagram of a Not ACK Action Request without interrupt to the NC.
Fig. 15 is a flowchart illustrating a subroutine of "TO NC NOT ACK ACTION".
Fig. 16 illustrates a diagram of a Not ACK Action Request from the PLC.
Fig. 17 is a flowchart illustrating a subroutine of "FROM PLC NOT ACK ACTION".
Fig. 18 illustrates a diagram of a Not ACK Action Request from the NC.
Fig. 19 is a flowchart illustrating a subroutine of "FROM NC NOT ACK ACTION"
Fig. 20 illustrates a diagram of a Not ACK Action Request to the PLC.
Fig. 21 is a flowchart illustrating a subroutine of "TO PLC NOT ACK ACTION".
Fig. 22 illustrates a diagram of a NOT ACK Action Request with interrupt to the NC.
Fig. 23 is a flowchart illustrating a subroutine of "TO NC+INT NOT ACK ACTION".
Fig. 24 illustrates a diagram of an ACK Action Request with interrupt to the NC.
Figs. 25A, 25B are flowcharts illustrating a subroutine of "TO NC+INT ACK ACTION".
Fig. 26 illustrates a diagram of real-time data continuously being sent to and from the NC.
Fig. 27 illustrates a method performed at the control node.
Fig. 28 illustrates a method performed at the Numeric Node.
Fig. 29 illustrates a method performed at the Programmable Logic Controller.
Fig. 30 is a diagram illustrating a control node in more detail, according to further possible embodiments.

### DETAILED DESCRIPTION

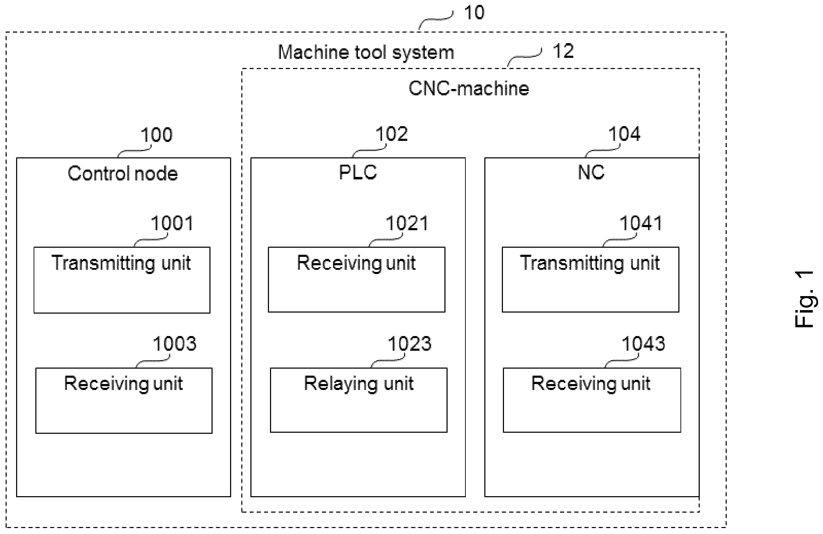

**Fig. 1** shows a non-limiting overview of a machine tool system 10, illustrating an exemplary embodiment. Machine tools may be milling machines, drilling machines and so on. Machine tools herein covers machines for both subtractive and additive manufacturing. The system 10 comprises a control node 100, comprising a transmitting unit 1001 for transmitting data signals and a receiving unit 1003 for receiving data signals. The control node 100 may be physically located inside a local machine tool system or remotely connected to the local machine tool system. The control node 100 may be, for example, a local computer, a server, a central located server, a cloud-based server, a virtual computer, etc. The machine tool system 10 further comprises a CNC-machine 12, also called machine tool or machine in this disclosure hereafter. The machine comprises a **P**rogrammable **L**ogic **C**ontroller (PLC) 102, comprising a PLC receiving unit 1021 for reception of data signals, a relaying unit 1023 for relaying data signals and a **N**umerical **C**ontrol (NC) 104 comprising a NC transmitting unit 1041 for transmitting data signals and a NC receiving unit 1043 for reception of data signals. The control node 100 is configured to transmit a data signal, comprising an action request which has an acknowledgment indication to the NC 104; the NC 104 is configured to trigger an action to be performed in the machine tool system based on the received action request, and the NC 104 is configured to send an acknowledgement ACK data signal if required by the acknowledgement indication to the control node 100. The connection between the control node 100 and the machine tool system 10 may be a wired connection or a wireless connection. In other embodiments, the communication between the control node 100 and the machine tool system 10 may be based on Ethernet, according to IEEE 802.3, etc., or WiFi, according to 802.11, etc., Bluetooth, TCP/IP (Transfer Control Protocol / Internet/Protocol) not limiting to other suitable formats.

An acknowledgement indication may be achieved in various ways. For example, the indication may be implemented as a part of an action request, e.g. a bit in the total data set or a specific bit in the data signal(s) may be used to indicate whether or not the action request requires an acknowledgment. However, the acknowledgement indication may also be implemented simply by using a different offset and/or range in the total data set for data signal(s) related to action requests requiring an acknowledgment (ACK actions) compared to data signal(s) related to action requests not requiring an acknowledgement (Not ACK actions). That is, data for ACK actions may be located at different positions in the total data set compared to data for Not ACK actions. Hence, a predefined set of bytes may be reserved for ACK actions, and another predefined set of bytes may be reserved for Not ACK actions. Thus, the acknowledgement indication may refer to whether the data of an action request is located at a specific position in the total data set, e.g. in one or more sets or ranges of bytes or bits that have been specifically allocated for ACK signals.

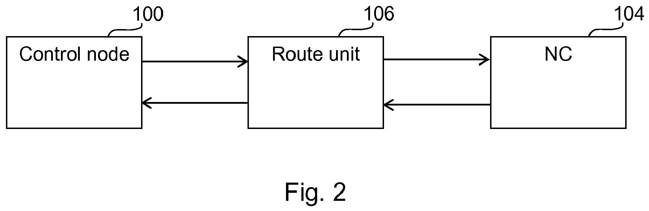

**Fig. 2** shows an exemplary communication between the control node 100 and the NC 104. The communication between the control node 100 and the NC 104 is bi-directional. Data signals sent between the control node 100 and the NC 104 are relayed over a routing unit 106. The routing unit 106 may be any type of device having the function of routing, such as a PLC, a router, a device comprising machine tool relay etc. In the present disclosure, PLC is used as an example for relaying the data signals.

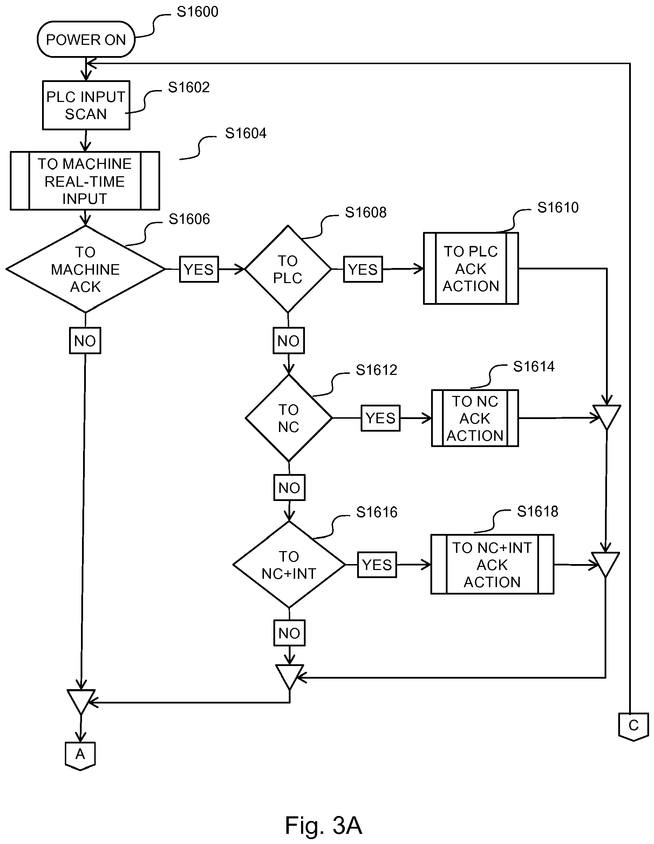

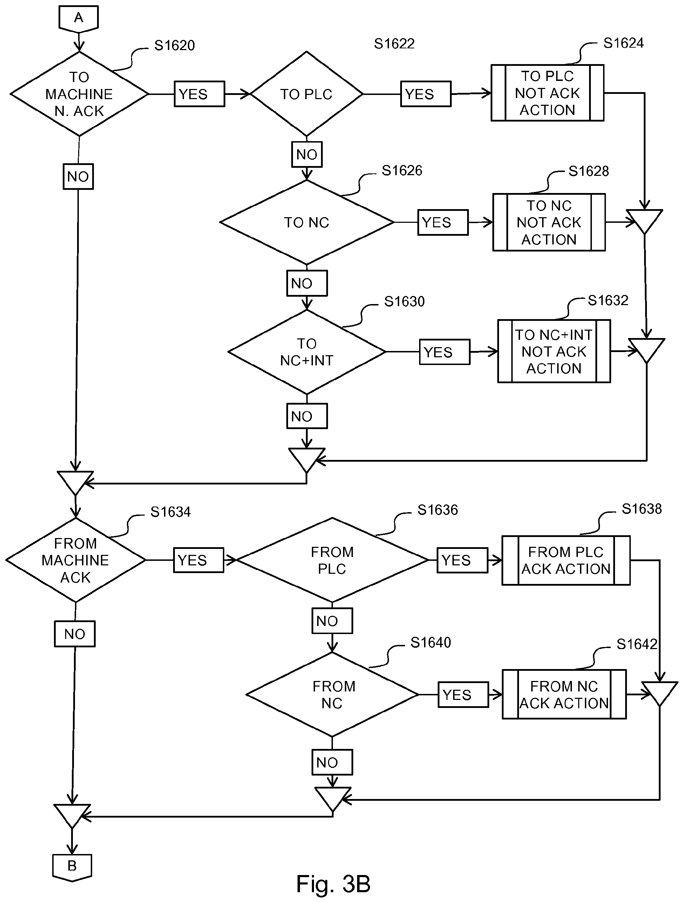

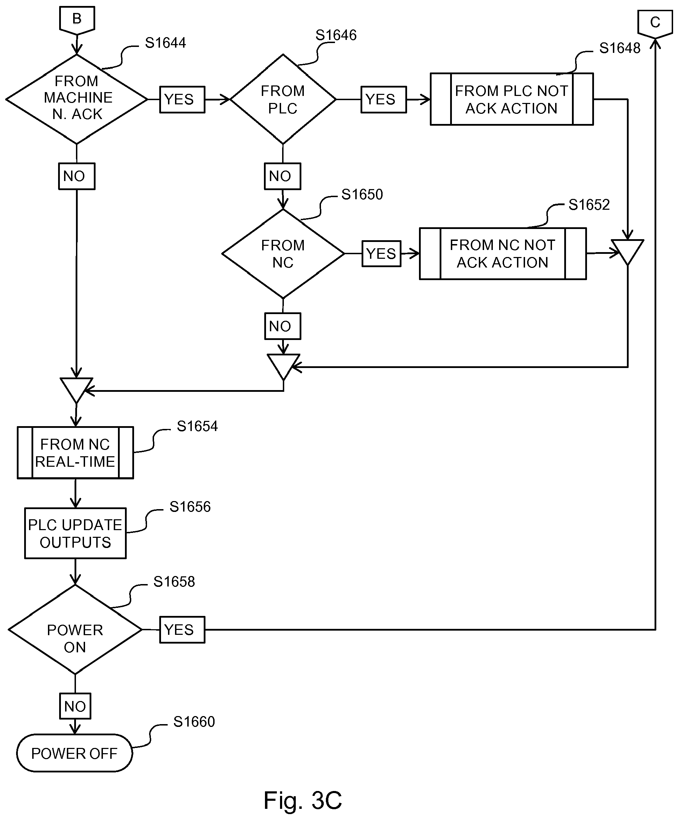

With reference to **Figs. 3A****,** **3B****, and** **3C****,** in combination with Table 1, a flowchart overview of exemplary methods performed by the system is shown. There are different types of data signals exchanged over the PLC interface that are divided into classes by their use and characteristics. Some data signals will work as pure information carriers, which will be referred as real-time information, such as a spindle speed, while others indicate a clear and dedicated task information, which will be called actions. Actions are what is used to start a process on either the PLC 102, NC 104 or the control node 100. The data signal class specification also includes the direction of a data signal which makes it possible to differentiate between inputs, which means data signals to the machine, and outputs, which means data signals sent from the machine. For example, data signals are divided into three input- and three output classes for a total of for example six different data signal classes, as listed with short descriptions in the exemplifying Table 1.

**TABLE 1 DESCRIPTIONS OF DATA SIGNALS**

| **Data signal class** | **Description** |
|---|---|
| Real-time to machine | Incoming setpoint values. |
| | Used for setting/overriding values to the PLC and/or NC in real-time. |
| Real-time from machine | Outgoing actual values and machine ID. |
| | Used for reading values and machine ID from the NC and/or PLC in real-time. |
| Not ACK to machine | Action types and values to the machine. |
| | Used for requesting actions which do not return an acknowledgement that the requested action is active. Actions of this class are divided into three groups: PLC, NC and NC+INTERRUPT. |
| Not ACK from machine | Action types and values from the machine. |
| | Used for requesting actions which do not return an acknowledgement that the requested action is active. Actions of this class are divided into two groups: PLC and NC. |
| ACK to machine | Action types and values to the machine. |
| | Used for requesting actions which return an acknowledgement that the requested action is active. Actions of this class are divided into three groups: PLC, NC and NC+INTERRUPT. |
| | Also used for acknowledging that an action is active on the control node. |
| ACK from machine | Action types and values from the machine. |
| | Used for requesting actions which return an acknowledgement that the requested action is active. Actions of this class are divided into two groups: PLC and NC. Also used for acknowledging that an action is active on the machine. |

In an exemplifying embodiment, the action data signals and some real-time data signals for a machine are defined by the number of tool carriers that can operate in the machine. Each tool carrier may be defined as a channel which has a corresponding set of data signals. There may be one of each action data signal per channel and the real-time data signal can be, for example, actual tool tip feed rate. Some real-time data signals are defined by the number of axes of the machine. Each axis has a corresponding set of data signals, one of each relevant real-time data signal per axis.

There are two ways of sending an Action Request, with or without acknowledgement that the action is active. If it is required to get a response when an action is active and to prevent further Action Requests on the same channel until the active action is finished, then the Action Request is sent using an ACK data signal. If this is not the case, then the Action Request is sent using a Not ACK data signal. These data signal classes are further explained in the following. For the convenience of description, the data signals sent from or to the machine are specified into NC and PLC in the descriptions.

Action Requests sent, for example, over the PLC interface, that do not acknowledge when the action is active are called Not ACK Actions Request, or unacknowledged Action Request. Sending an unacknowledged Action Request may be done by setting the value of the action type and action value to the ranges of Not ACK data signals for a period which is called off-delay. In some embodiments, the off-delay period is 250 ms, to make sure the receiving end has a high probability of reading the data signals. Before any further Action Requests can be sent, the previous Action Request must be reset to zero for a period of 200 ms as an example.

Not ACK data signals are not verified as to whether they are supported or in range, and action types and values are dropped after the off-delay of the Action Request. Any unsupported action types or action values out of range are therefore also dropped without being handled.

The action types of the Not ACK data signal classes are sectioned into different groups. These groups define where the Action Requests are sent from for data signals from the machine and where the Action Requests are headed for data signals to the machine. Within these groups there are two separate ranges, one for reserved action types and one for unreserved action types. For an exemplary list of action type groups, see Table 2.

**TABLE 2 NOT ACK DATA SIGNAL CLASS GROUPS**

| **Action type group** | **Reserved range** | | **Unreserved range** | |
|---|---|---|---|---|
| | **Min** | **Max** | **Min** | **Max** |
| No signal | 0x00000000 | 0x00000000 | | |
| PLC | 0x00000001 | 0x0FFFFFFF | 0x10000000 | 0x1FFFFFFF |
| CNC | 0x20000000 | 0x2FFFFFFF | 0x30000000 | 0x3FFFFFFF |
| CNC+INTERRUPT | 0x40000000 | 0x4FFFFFFF | 0x50000000 | 0x5FFFFFFF |
| Reserved | 0x60000000 | 0xFFFFFFFF | | |

Action Requests sent, for example, over the PLC interface, that require acknowledgements when the action is active are called ACK actions. The acknowledge data signal, or ACK data signal, has the same content as the action type in the corresponding Action Request.

The PLC interface requires verification of the Action Requests in all ACK action data signals, both to and from the machine. If an Action Request with an unsupported action type is received, then the acknowledge data signal is set to an error action type (for example, 0x600000001) for unsupported actions instead of the normal behavior of setting the received action type as the acknowledge. If an Action Request holds an action value which is out of range, then the acknowledge data signal is set to an error action type (for example, 0x600000002) for action value out of range. If an error is detected on the machine it must stop immediately and log the error. If an error is detected in the control node 100, it will stop the service and log the error.

The action types of the ACK data signal classes are sectioned into different groups. These groups define where the Action Requests are sent from for data signals from the machine and where the Action Requests are headed for data signal to the machine. Within these groups there are two separate ranges, one for reserved action types and one for unreserved action types. For an exemplary list of action type groups, see Table 3. In the list, CNC+INTERRUPT is only used in Action Requests to the machine.

**TABLE 3 ACK DATA SIGNAL CLASS GROUPS**

| **Action type group** | **Reserved range** | | **Unreserved range** | |
|---|---|---|---|---|
| | **Min** | **Max** | **Min** | **Max** |
| No signal | 0x00000000 | 0x00000000 | | |
| PLC | 0x00000001 | 0x0FFFFFFF | 0x10000000 | 0x1FFFFFFF |
| CNC | 0x20000000 | 0x2FFFFFFF | 0x30000000 | 0x3FFFFFFF |
| CNC+INTERRUPT | 0x40000000 | 0x4FFFFFFF | 0x50000000 | 0x5FFFFFFF |
| Reserved | 0x60000000 | 0xFFFFFFFF | | |

To further clarify the data signals, an exemplary list of action data signals from the machine is shown in Table 4.

**TABLE 4 LIST OF ACTION DATA SIGNALS FROM THE MACHINE**

| **Data signal** | **Class** | **Description** |
|---|---|---|
| FrMachAck | ACK from Machine | Data signal from a channel used to acknowledge that an Action Request is active on the machine. An acknowledge contains the same data as the received action type. |
| FrMachAckType | ACK from Machine | Data signal containing an action type from the machine. Used together with an action value for sending Action Requests from a channel. An acknowledge data signal to the machine is expected after the Action Request is received. |
| FrMachAckValue | ACK from Machine | Data signal containing an action value from the machine. Used together with an action type for sending Action Requests from a channel. An acknowledge data signal to the machine is expected after the Action Request is received. |
| FrMachType | Not ACK from Machine | Data signal containing an action type from the machine. Used together with an action value for sending Action Requests from a channel. |
| FrMachValue | Not ACK from Machine | Data signal containing an action value from the machine. Used together with an action type for sending Action Requests from a channel. |

To avoid the wrong action value to be sent with the Action Request a requirement may be applied, for example such that the two data signals comprised in the Action Request (i.e. action type and action value) are received as a pair. The security may be further enhanced through setting the action value before the action type, and then the Action Request is sent as soon as the action type is set.

Further, an exemplary list of action data signals sent to the machine is shown in Table 5.

**TABLE 5 LIST OF ACTION DATA SIGNALS TO THE MACHINE**

| **Data signal** | **Class** | **Description** |
|---|---|---|
| ToMachAck | ACK to Machine | Data signal to a channel used to acknowledge that an Action Request sent from the machine is active. An acknowledge contains the same data as the received action type. |
| ToMachAckType | ACK to Machine | Data signal containing an action type to the machine. Used together with an action value for receiving Action Requests to a channel. An acknowledge data signal from the machine is expected after the Action Request is received. |
| ToMachAckValue | ACK to Machine | Data signal containing an action value to the machine. Used together with an action type for receiving Action Requests to a channel. An acknowledge data signal from the machine is expected after the Action Request is received. |
| ToMachType | Not ACK to Machine | Data signal containing an action type to the machine. Used together with an action value for receiving Action Requests to a channel. |
| ToMachValue | Not ACK to Machine | Data signal containing an action value to the machine. Used together with an action type for receiving Action Requests to a channel. |

To avoid the wrong action value to be sent with the Action Request a requirement may be applied, for example such that the two data signals comprised in the Action Request (i.e. action type and action value) are received as a pair. The security may be further enhanced through setting the action value before the action type, and then the Action Request is handled by the PLC as soon as the action type is set.

The PLC program for the PLC interface is executed as seen in the flow charts of Figs. 3A, 3B, 3C. If the PLC is powered on in S1600 and the scan cycle has started, in every scan cycle the input data signals are scanned and updated to the PLC working memory in S1602. One example in this step is, the PLC receives real-time inputs for overriding speeds, feeds and axis positions in every scan cycle independently from any activities regarding ACK or NOT ACK signals. Another example is, the PLC receives action request inputs for triggering actions in every scan cycle. The next step in the scan cycle is to send real-time data signals to the machine in S1604 and after that the method checks if any action data signals are active. There are four branches for action data signals, one of which is shown in Figs. 3A, 3B, 3C, i.e. the TO MACHINE ACK action branch at S1606. There are three different groups of actions able to activate this branch and the subroutine which is related to the action will be called. The entire branch for the channel is locked to the active action until it is finished. If the data signal is sent to PLC at S1608, the "TO PLC ACK ACTION" will be triggered at S1610. If the data signal is sent to NC at S1612, the "TO NC ACK ACTION" will be triggered at S1614. If the data signal is sent to NC with interrupt at S1616, the "TO NC+INT ACT ACTION" will be triggered at S1618.

A second action branch of TO MACHINE NOT ACK is shown at S1620. There are also three different groups of actions that are able to activate this branch and the subroutine which is related to the action will be called. The entire branch for the channel is locked to the active action until it is finished. If the data signal is sent to PLC at S1622, the "TO PLC NOT ACK ACTION" will be triggered at S1624. If the data signal is sent to NC at S1626, the "TO NC NOT ACK ACTION" will be triggered at S1628. If the data signal is sent to NC with interrupt at S1630, the "TO NC+INT NOT ACT ACTION" will be triggered at S1632.

A third action branch of FROM MACHINE ACK is shown at S1634. There are two different groups of actions that are able to activate this branch and the subroutine which is related to the action will be called. The entire branch for the channel is locked to the active action until it is finished. If the data signal is sent from PLC at S1636, the "FROM PLC ACK ACTION" will be triggered at S1638. If the data signal is sent from NC at S1640, the "FROM NC ACK ACTION" will be triggered at S1642.

A fourth action branch of FROM MACHINE NOT ACK is shown at 1644. There are two different groups of actions that are able to activate this branch and the subroutine which is related to the action will be called. The entire branch for the channel is locked to the active action until it is finished. If the data signal is sent from PLC at S1646, the "FROM PLC NOT ACK ACTION" will be triggered at S1648. If the data signal is sent from NC at S1650, the "FROM NC NOT ACK ACTION" will be triggered at S1652.

If no action data signal is active, the real-time data signals from NC are sent every scan cycle independently from any activities regarding ACK or NOT ACK signals in the PLC at S1654 and the outputs are updated at S1656 before the next scan cycle starts at S 1658. If the PLC is not powered on in step S1658 the method proceeds to step S1660, in which the PLC is powered off.

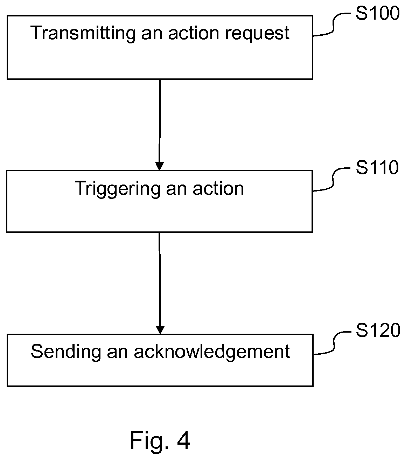

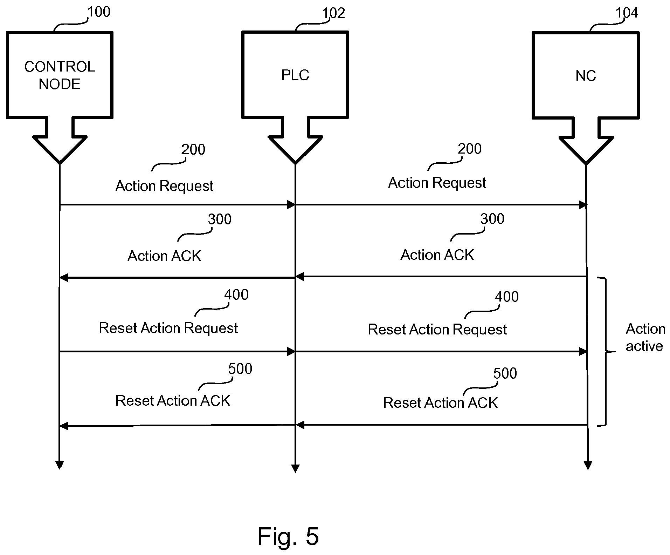

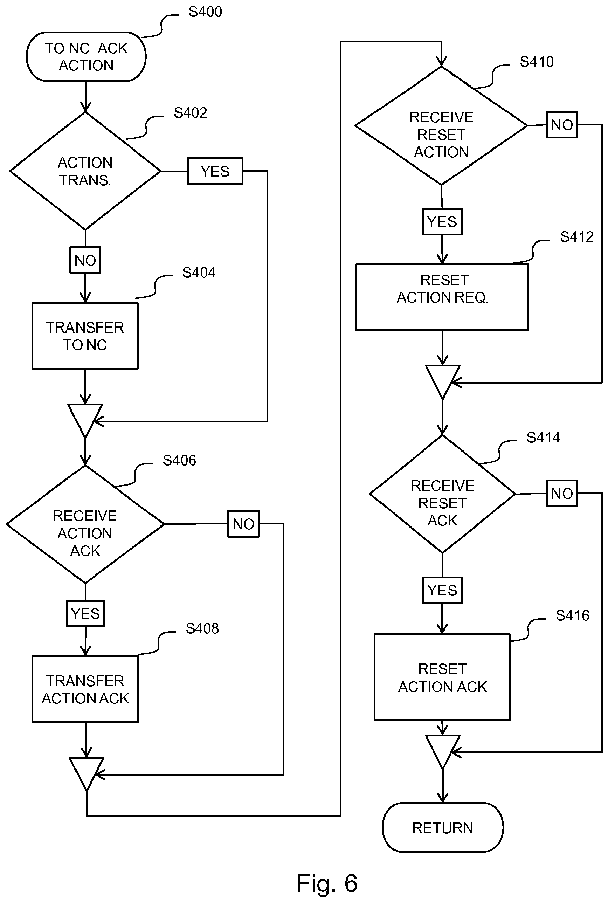

Turning to **Fig. 4** now. A method for communication in the machine tool system is described in combination with Fig. 4 and 5. The control node 100 and the NC 104 are configured to exchange data signals with each other and the PLC 102 comprises an interface configured to relay data signals, between the control node 100 and the NC 104. The method comprises transmitting a data signal at step S100, from the control node 100 to the NC 104, the data signal comprises an action request 200 which comprises an acknowledgment indication; triggering, in the NC 104, an action to be performed in the machine tool system based on the received action request at step S110, and sending an acknowledgement ACK 300 data signal if required by the acknowledgement indication at step S120, from the NC 104 to the control node 100. **Fig. 5** and **6** illustrate non-limiting embodiments of the solution through a detailed flowchart. At S400, if a data signal with the type of "TO NC ACK ACTION" is sent from the control node 100 to the PLC 102, a step of determining whether the action request 200 is transferred is performed at the PLC at S402. If not, the action request 200 is transferred to the NC 104 at S404 and proceeds to the main process. If yes, the method proceeds to the main process directly. At S406, the PLC 102 will determine whether an acknowledgement of the action request is received from the NC 104. The acknowledgement ACK 300 data signal comprises data indicating that the action is active. If yes, the PLC 102 will transfer the acknowledgement ACK 300 of the action request from the NC 104 to the control node 100 at S408. If, no, the method proceeds directly to the main process. The control node 100 will reset the action request after receiving the acknowledgement ACK data signal. At S410, the PLC 102 will determine whether a reset action request 400 from the control node 100 is received, if yes, the PLC 102 will relay the reset action request 400 to the NC 104 at S412 and return to the main process, if no, the method proceeds to the main process directly. At S414, the PLC 102 checks whether an acknowledgement of the reset action request 500 is received from the NC 104, if yes, the PLC 102 will relay the acknowledgement of reset action request 500 to the control node 100 at S416 and return to the main process, if no, the method proceeds to the main process directly.

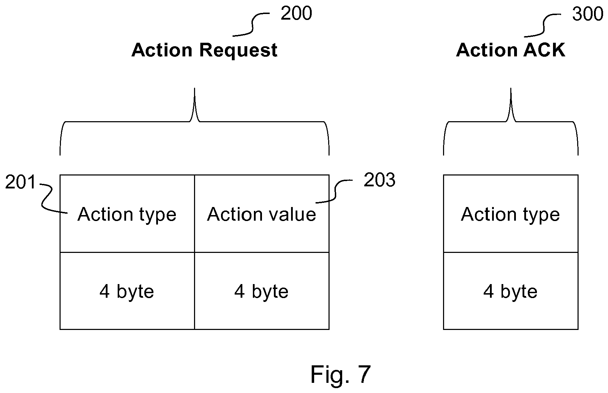

**Fig.7** shows an exemplary structure of an action request and an action acknowledgement. An action request may comprise a subset of data signals requesting an action to be executed, either by PLC 102 or by NC 104 within the running NC-program or by NC within another NC-program to be executed after interruption of the running NC-program. An Action Request 200 may comprise a subset of two different data signals, one action type 201 data signal and one action value 203 data signal as shown in Fig.7. The action type 201 identifies what action to process and the action value 203 carries information on how to execute the action. The action type 201 further comprises information about which part of the CNC system that shall execute the whole action which contains the action type together with the action value. Because of the structure of the subset of data signals, the CNC system can process the data signals much faster than conventional systems and the efficiency of the system has been significantly improved. All 4 bytes of the action data signals of the subset are used to represent an action type or action value. Transferring actions from PLC to NC is done by copying the subset of-data signals to NC variables which the NC program can use. Transferring the subset of data signals from NC to PLC is done by copying the subset-of data signals from NC variables used by the NC program. An acknowledgement ACK data signal as shown in Fig. 6 comprises the action type of the corresponding action. 4 bytes are used to represent the action type.

From the descriptions above, it is exemplified that actions may be sent in both directions, to and from the machine. Action types and values may in an embodiment be required to be sent and received together as an Action Request to prevent the wrong type and value to be processed together. In an embodiment, the action value is set before the action type to eliminate the risk of executing an action with an incorrect action value.

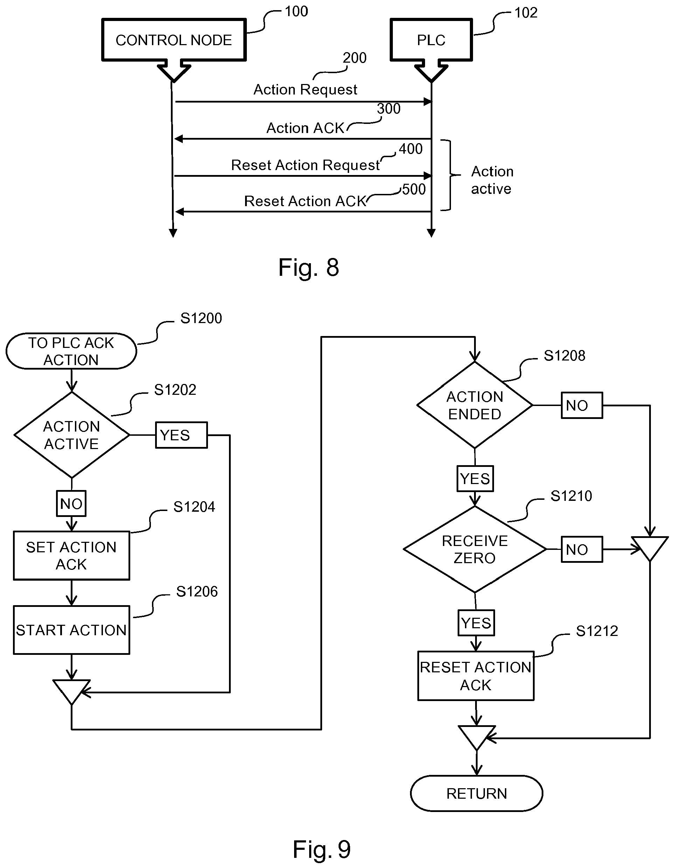

**Fig. 8** and **9** show a non-limiting exemplary diagram and subroutine of sending data signals requiring acknowledgement ACK to the PLC 102. At S1200, if a data signal with the type of "TO PLC ACK ACTION" is sent from the control node 100 to the PLC 102, a step of determining whether the action is active is performed at S1202 at the PLC 102. If not, the PLC 102 sets the Action ACK 300 and sends it back to the control node 100 at S1204, then the PLC 102 starts the action at S1206 and return to the main process, the acknowledgement ACK 300 data signal comprises data indicating that the action is active. If yes, the method returns to the main process directly. At S1208, the PLC 102 will determine whether the action is ended, if yes, the PLC 102 will determine whether it has received a zero which means a reset Action Request 400 at S1210, if no, the method returns to the main process directly. If the PLC 102 has received the Reset Action Request 400, it resets the Action ACK 500 at S1212 and then return to the main process, if no, the method returns to the main process directly.

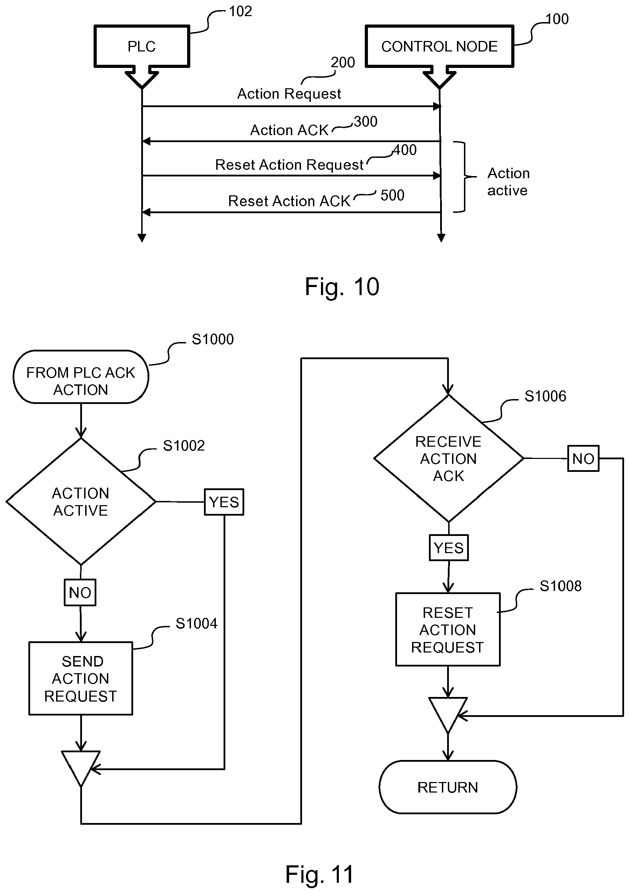

**Fig. 10** and **11** show further exemplary embodiments of the solution through a diagram and subroutine of sending data signals requiring acknowledgement ACK from the PLC 102 to the control node 100. At S1000, if a data signal with the type of "FROM PLC ACK ACTION" is sent from the PLC 102 to the control node 100, a step of determining whether the action is active is performed at S1002 at the PLC 102. If not, the PLC 102 sends an Action Request 200 to the control node 100 at S1004 and return to the main process, if yes, the method proceeds to the main process directly. At S1006 the PLC 102 determines whether an Action ACK 300 is received, if yes, the PLC will send a Reset Action Request 400 to the control node 100 at S1008 and return to the main process, if no, the method proceeds to the main process directly. The control node 100 sends a Reset Action ACK 500 back to the PLC 102 after receiving the reset Action Request 400.

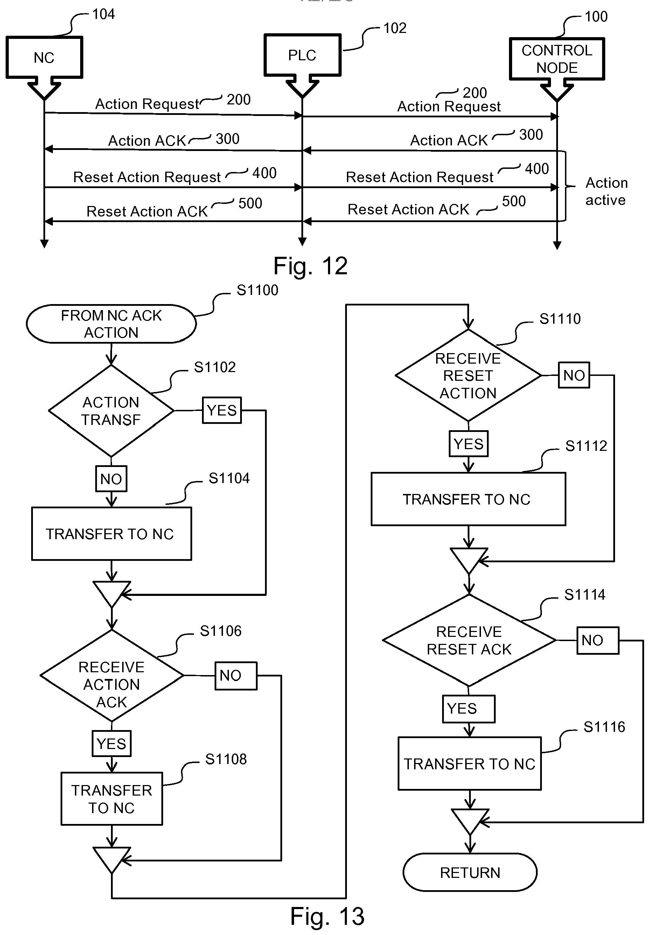

**Fig. 12** and **13** show a diagram and subroutine of sending data signals requiring acknowledgment ACK from the NC 104. At S1100, if a data signal with the type of "FROM NC ACK ACTION" is sent from the NC 104 to the PLC 102, a step of determining whether the action request 200 is transferred is performed at the PLC 102 at S1102. If not, the action request 200 is transferred to the control node 100 at S1104 and proceeds to the main process. If yes, the method proceeds to the main process directly. At S1106, the PLC 102 will determine whether an acknowledgement of the action request is received from the control node 100. The acknowledgement ACK 300 data signal comprises data indicating that the action is active. If yes, the PLC 102 will transfer the acknowledgement ACK 300 of the action request from the control node 100 to the NC 104 at S1108. If, no, the method proceeds directly to the main process. The NC 100 will reset the action request after receiving the acknowledgement ACK data signal. At S1110, the PLC 102 will determine whether a reset action request 400 from the NC 104 is received, if yes, the PLC 102 will relay the reset action request 400 to the control node 100 at S 1112 and return to the main process. At S1114, the PLC 102 checks whether an acknowledgement of the reset action request 500 is received from the control node 100, if yes, the PLC 102 will relay the acknowledgement of reset action request 500 to the NC 104 at S1116 and return to the main process, if no, the method returns to the main process directly.

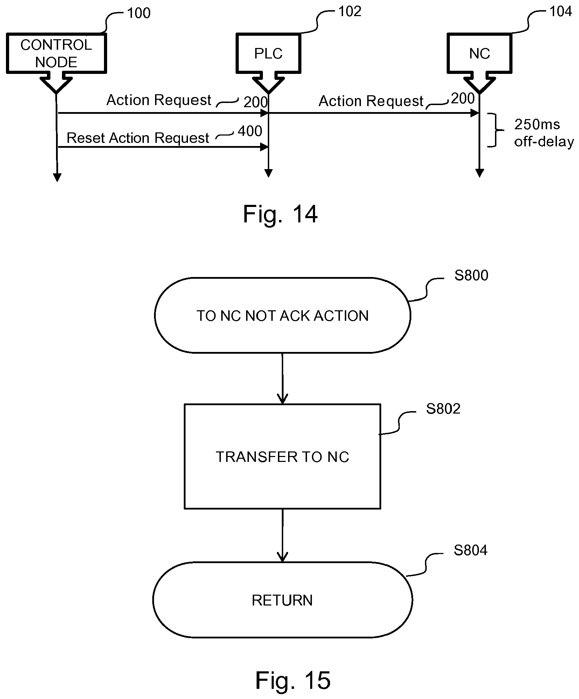

**Fig.14** and **15** show a diagram and subroutine of sending data signals not requiring acknowledgement to the NC 104. If an action request 200 is sent from the control node 100 to the NC 104 at S800, the PLC 102 will transfer the action request 200 to the NC 104 at S802, and no acknowledgement will be sent back. The control node 100 resets the action request after a predetermined period. The predetermined period can be decided according to the user's need. In this embodiment, 250 ms is shown as an example. The Reset Action Request 400 is sent from the control node 100 to the PLC 102, then the method returns to the main process at S804. Before any further Action Requests can be sent, the previous Action Request must be reset to zero for a period. The period can be decided according to the user's need, for example 200 ms. However, it's recommended to use the same time between sending signals and resetting sending signals.

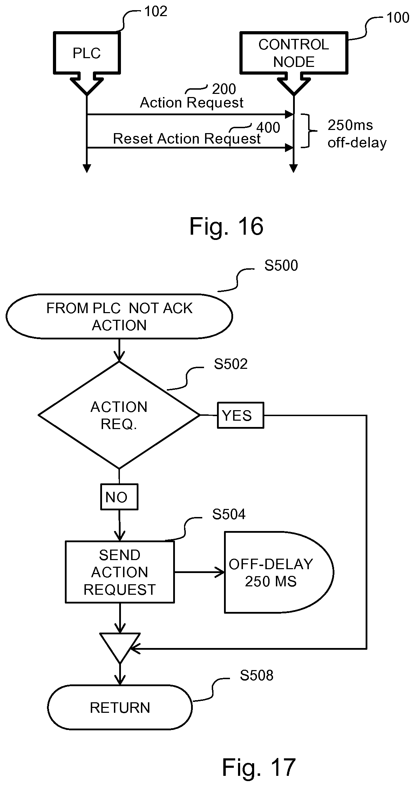

When an Action Request 200 is active, in an embodiment of the solution, it blocks any new Action Requests of the same group and channel until the Action Request is reset. This reset normally occurs after the requested action is finished for acknowledgment ACK data signals or after a specified period for Not ACK data signals. The specified period can be decided according to users' need. In this disclosure, an exemplary period of 250 ms is shown in **Fig.16** to **Fig.21**. Before any further Action Requests can be sent, the previous Action Request must be reset to zero for a period. The period can be decided according to the user's need, for example 200 ms. However, it's recommended to use the same time between sending signals and resetting sending signals. The workflows will be described in detail below.

Fig. 16 and 17 show a diagram and subroutine of sending data signals not requiring acknowledgment to the control node 100. If a data signal with the type of "FROM PLC NOT ACK ACTION" is sent from the PLC 102, a step of determining whether the Action Request 200 is sent is performed at S502, if not, the PLC 102 sends the action request 200 to the control node 100 at S504 with an off-delay period and returns to the main process at S508, if yes, the method returns to the main process directly. The period can be decided according to users' need. In this disclosure, an exemplary period of 250ms is shown in Fig. 16 and 17. After the period, the PLC 102 will send a Reset Action Request 400 to the control node 100.

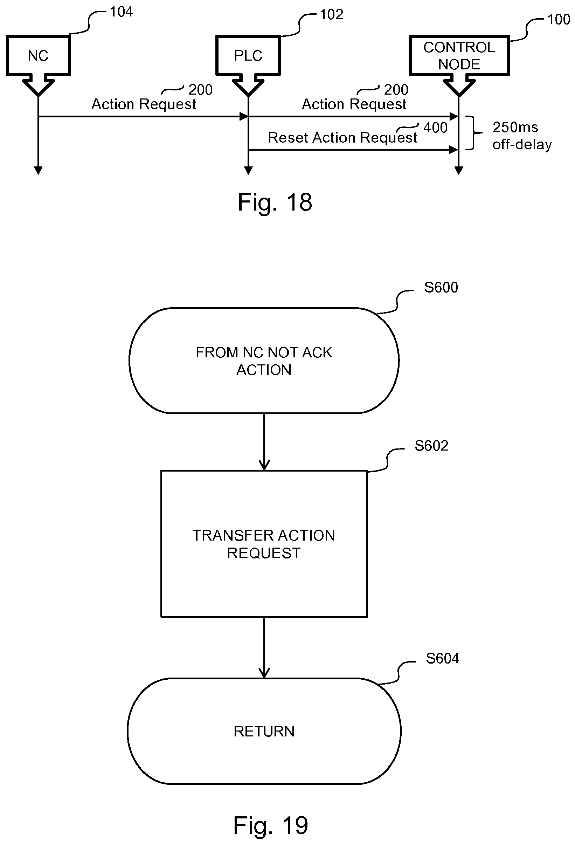

Fig. 18 and 19 show a diagram and subroutine of sending data signals not requiring acknowledgment from the NC 104 to the control node 100. If a data signal with the type of "FROM NC NOT ACK ACTION" is sent from the NC 104 at S600, the action request 200 is transferred from the PLC 102 to the control node 100 at S602 and returns to the main process at S604. The PLC 102 will send a Reset Action Request 400 to the control node 100 after a specified period. The period can be decided according to users' need. In this disclosure, an exemplary period of 250 ms is shown in Fig. 18 and 19.

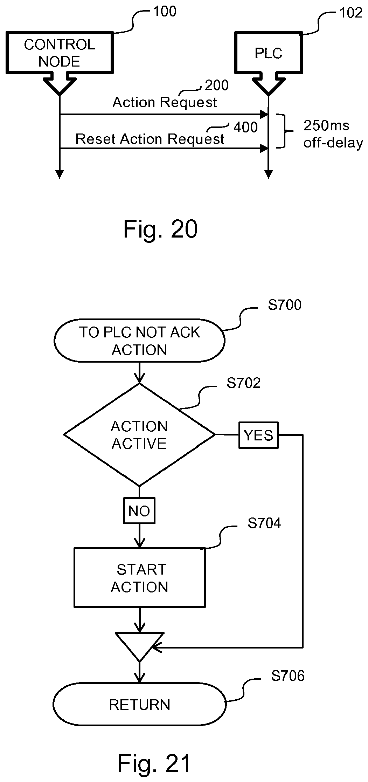

Fig. 20 and 21 show a diagram and subroutine of sending data signals not requiring acknowledgment to the PLC 102. If an action request 200 with the type of "TO PLC NOT ACK ACTION" is sent from the control node 100 to the PLC 102 at S700, a step of determining whether an action is active at the PLC 102 at S702, if not, the PLC start the action at S704 and returns to the main process at S706, if yes, the method returns to the main process directly. The control node 100 will send a Reset Action Request 400 to the PLC 102 after a specified period. The period can be decided according to users' need. In this disclosure, an exemplary period of 250 ms is shown in Fig. 20 and 21.

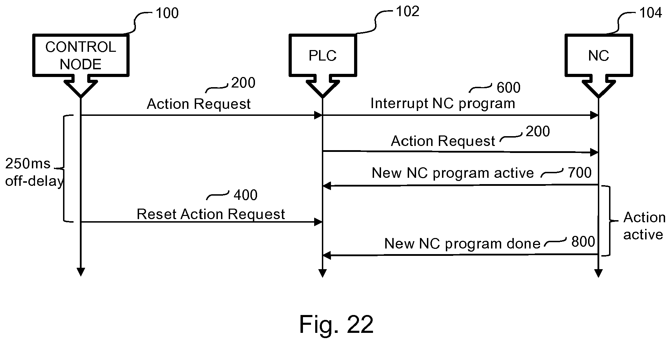

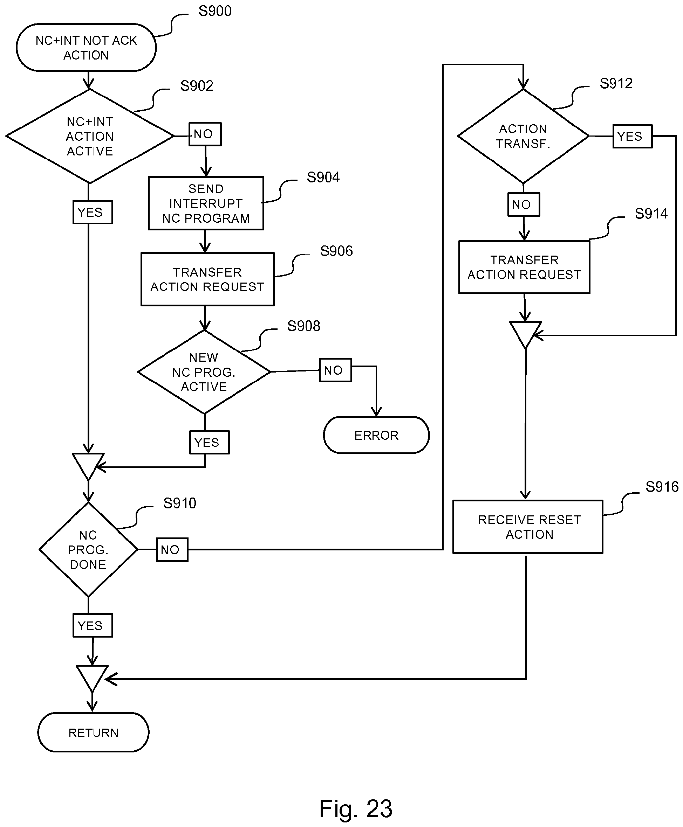

**Fig. 22** and **23** illustrates non-limiting examples of a diagram and subroutine of sending data signals not requiring acknowledgement with interrupt to the NC 104. If an action request 200 with the type of "NC+INT NOT ACK ACTION" is sent at S900, and if the PLC 102 determines that there is no interrupt NC program active at S902, the PLC 102 sends an interrupt NC program 600 to the NC 104 at S904 and transfers the Action Request 200 to the NC 104 at S906. The PLC 102 will check if the new interrupt NC program is active in step S908, if yes, the method returns to the main process. If it did not start an error will be indicated. If the interrupt NC program is active 700 but not done at S910, the PLC 102 will determine whether the new Action Request is transferred to the NC 104 at S912, if not, the PLC 102 transfers the Action Request to the NC 104 at S914. If this is done the method returns to the main process flow. At S916, the PLC 102 will receive a Reset Action Request 400. When the new NC program is done, the NC 104 will send new NC program done 800 to the PLC 102.

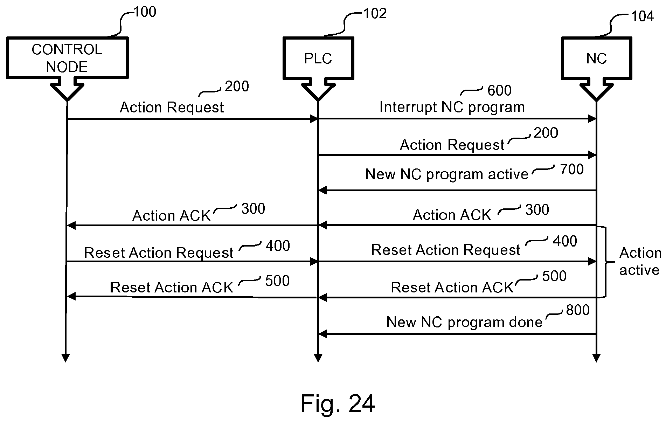

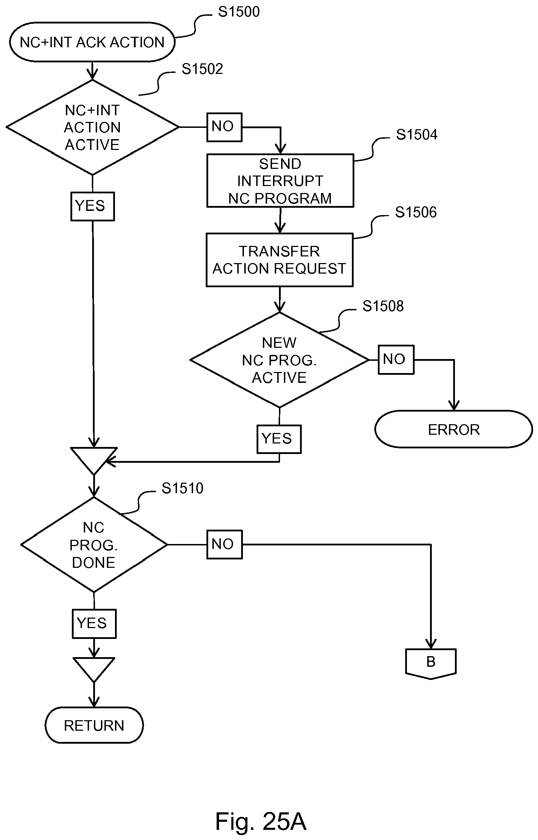

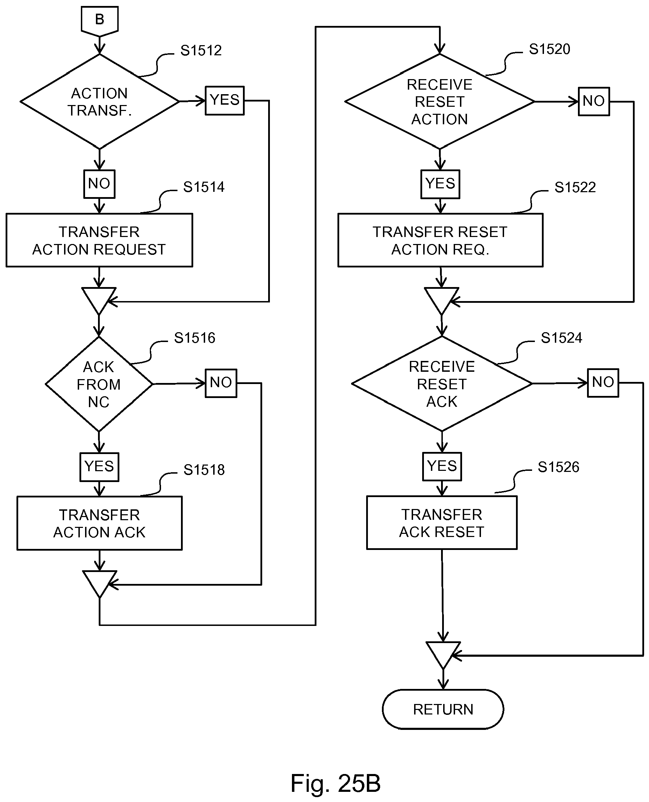

**Fig. 24****,** **25A** **and** **25B** illustrates non-limiting examples of a diagram and subroutine of sending data signals requiring acknowledgement with interrupt to the NC 104. If a NC+INT ACK Action Request 200 is received at the PLC 102 at S1500 and the PLC 102 determines whether there is an interrupt NC program 600 active at S1502, if no, the PLC sends an interrupt to the NC program at S1504 and transfers the Action Request 200 to the NC 104 at S1506, if yes, the method proceeds to the main process. Immediately the PLC 102 will check if the new interrupt NC program has started at S1508. If it did not start, indicate an error. If it did start, continue. If the interrupt NC program 600 is done, the method returns to the main process. If the interrupt NC program 600 is active but not done at S1510, the PLC 102 will proceed to determine whether a new Action Request is transferred to the NC 104 at S1512, if not, the PLC 102 transfers the Action Request to the NC 104 at S1514, if yes, the method proceeds to the main process. At S1516, the PLC 102 checks whether an acknowledgement action ACK 300 from the NC 104 has been received at S1516, if yes, the PLC 102 transfers the acknowledgment action ACK 300 to the control node 100 at S1518, if no, return to the main process flow. At S1520, the PLC 102 will check whether a Reset Action Request 400 is received, if yes, the PLC 102 transfers the Reset Action Request 400 to the NC 104 at S1522. Then the PLC 102 checks whether an acknowledgement of the reset action 500 has been received at S1524, if yes, the PLC 102 transfers the acknowledgement of the reset action 500 to the control node at S1526, if not, the method returns to the main process. When the new NC program is done, the NC 104 will send new NC program done 800 to the PLC 102.

As described and exemplified above, the data signals may also include real-time data signals. Real-time data signals are used to request status or changing parameters of machine tools. In some embodiments, the real-time data signals are used for changing parameters of a working state of a cutting tool connected to the machine tool system, or a working state of a machine tool. More specifically, the real-time data signals are used for changing multiplicators for the tool tip feed rates and the speed of spindles. This enables the control node 100 to change setpoint values to the machine remotely. In some embodiments, these real-time data signals are scanned from the PLC 102 I/O image table at the beginning of every scan cycle and they are relayed to the NC 104 via the PLC 102. In some other embodiments, these real-time data signals are transferred directly between the Control Node 100 and the NC 104.

Real-time data signals from the machine may be used to send actual values like axis load or tool tip feed rate from the NC 104 to an IT system, i.e., a host, a server, a control node etc. In the present disclosure, a control node is used as an example. In some embodiments, real-time output signals are updated to the PLC 102 I/O image table at the end of every scan and they are relayed from the NC 104 via the PLC 102. In some other embodiments, these real-time data signals are transferred directly between the Control Node 100 and the NC 104. In some other embodiments, there are also two static real-time data signals from the machine with machine ID information sent directly from the PLC 102 to the control node 100.

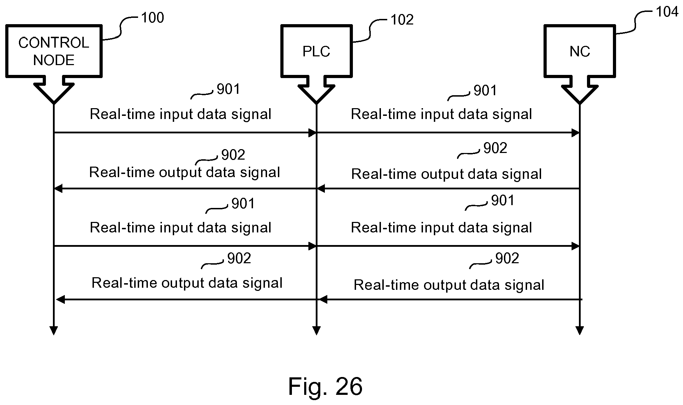

A diagram of the real-time data signals continuously being sent back and forth is exemplified in **Fig. 26**. The control node 100 may send a real-time input data signal 901 to the NC 104 via the PLC 102, and the NC 104 may respond with a real-time output data signal 902 sent via the PLC 102.

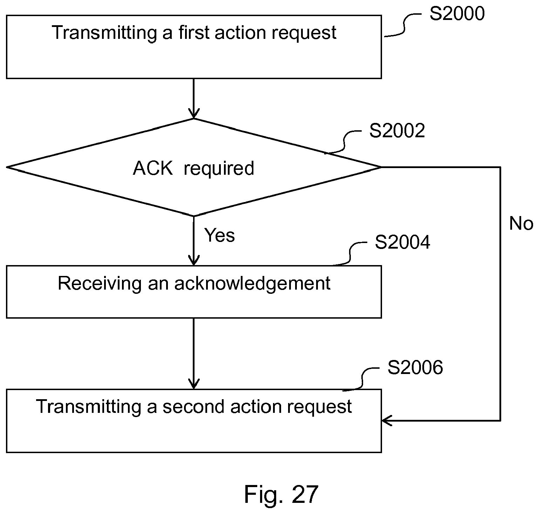

**Fig. 27** illustrates an exemplary process flow performed at the control node 100. The control node 100 transmits a first action request including an indication whether an acknowledgement ACK data signal is required or not to the NC 104 over the PLC 102 at S2000; If an acknowledgement is required, the control node 100 receives the acknowledgement from the NC 104 at S2004, and then transmits a second action request at S2006. If an acknowledgement is not required, the control node 100 then transmits a second action request at S2006 directly after a pre-determined period. As described above, the data signals can also be sent in an opposite direction, which means that the control node 100 is also configured to receive data signals from the PLC 102 or the NC 104. The detailed process will not be described in detail here.

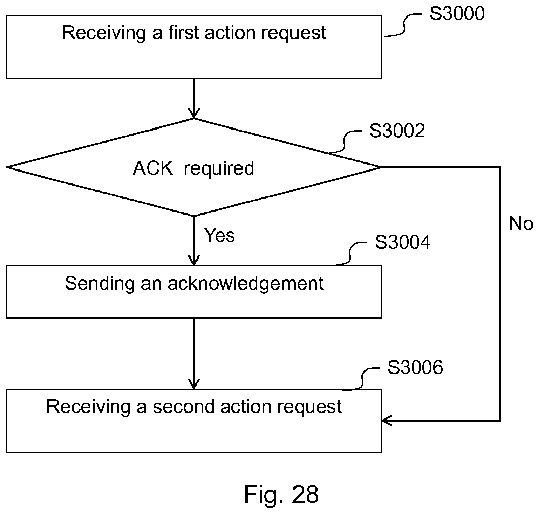

**Fig. 28** illustrates an exemplary process flow performed at the NC 104. The NC 104 receives a first action request including an indication whether an acknowledgement ACK data signal is required or not from the control node 100 over the PLC 102 at S3000; If an acknowledgement is required, the NC 104 sends the acknowledgement to the control node 100 at S3004, and then receives a second action request at S3006. If an acknowledgement is not required, the NC 104 then will receive a second action request at S3006. As described above, the data signals can also be sent in an opposite direction, which means that the NC 104 is also configured to send data signals to the PLC 102 or the control node 100. The detailed process will not be described in detail here.

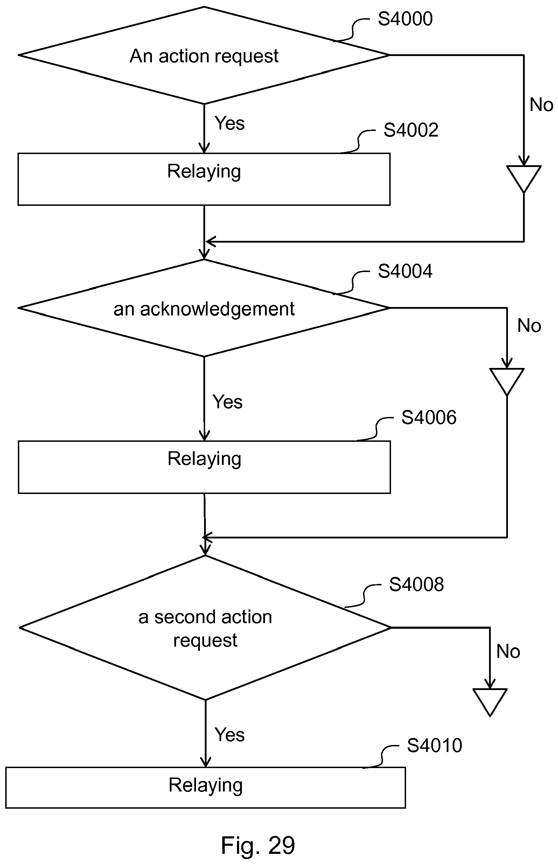

**Fig. 29** illustrates an exemplary process flow performed at the PLC 102. The PLC 102 checks whether a first action request including an indication whether an acknowledgement ACK data signal is required or not is received from the control node 100 at S4000; If yes, the PLC 102 relays the first data signal to the NC 104 at S4002, if no, return to the main process. Then the PLC checks whether an acknowledgement is received from the NC 104 at S4004, if yes, the PLC 102 relays the acknowledgement to the control node 100 at S4006, if no, return to the main process and then the PLC 102 checks whether a second action request is received at S4008, if yes, the PLC relays the second data signal to the NC 104 at S4010, if no, return to the main process. As described above, the data signals can also be sent in an opposite direction, which means that the direction of the data signals and acknowledgements sent over the PLC 102 can be in an opposite direction. The detailed process will not be described in detail here.

Accordingly, a control node for controlling a machine tool system is disclosed, wherein the machine tool system comprises a PLC, a NC and the control node, wherein the PLC comprises an interface configured to relay data signals between the control node and the NC, the control node is configured to exchange data signals with the NC and to trigger functionality over the PLC interface, wherein the data signals include an indication whether an acknowledgement ACK data signal is required or not.

Accordingly, a NC in a machine tool system is disclosed, wherein the machine tool system comprises a PLC, the NC and a control node, wherein the PLC comprises an interface configured to relay data signals between the control node and the NC, the NC is configured to exchange data signals with the control node and to trigger functionality over the PLC interface, wherein the data signals include an indication whether an acknowledgement ACK data signal is required or not.

Accordingly, a PLC in a machine tool system is disclosed, wherein the machine tool system comprises the PLC, a NC and a control node, wherein the PLC comprises an interface configured to relay data signals between the control node and the NC, the NC is configured to exchange data signals with the control node and to trigger functionality over the PLC interface, wherein the data signals include an indication whether an acknowledgement ACK data signal is required or not.

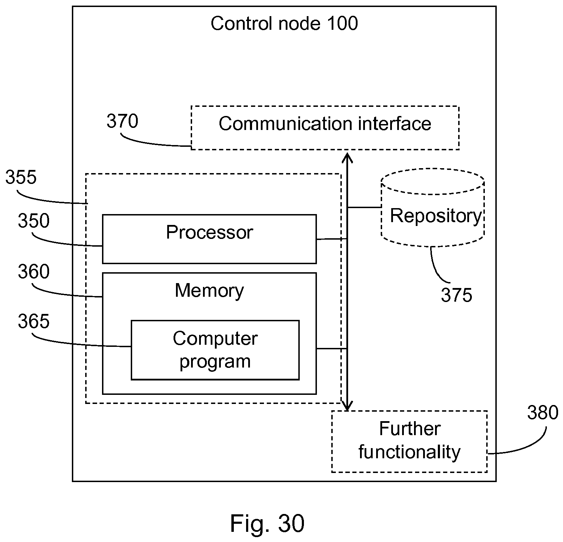

With reference to **Fig. 30** the control node 100 may further comprise a communication interface 370, which may be considered to comprise conventional means for communicating from and/or to the other devices in the network, such as the PLC and/or the NC in the CNC controlled machine tool system. The conventional communication means may include at least one transmitter and at least one receiver. The communication interface may further comprise one or more repository 375 and further functionality 380 useful for the control node 100 to serve its purpose as a controller to the machine tool system, such as setting working parameters of the machine tools, internal communications bus, internal cooling, database engine, operating system, not limiting to other functionalities.

The instructions executable by a processor may be arranged as a computer program 365 stored in said at least one memory 360. The at least one processor 350 and the at least one memory 360 may be arranged in an arrangement 355. The arrangement 355 may be a microprocessor and adequate software and storage therefor, a Programmable Logic Device, PLD, or other electronic component(s)/processing circuit(s) configured to perform the actions, or methods, mentioned above.

The computer program 365 may comprise computer readable code, which when run in the system 10 causes the control node 100 to perform the steps described in any of the methods described in relation to Fig. 3A-29. The computer program may be carried by a computer readable storage medium connectable to the at least one processor. The computer readable storage medium may be the at least one memory 360. The at least one memory 360 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the at least one memory 360.

Although the instructions described in the embodiments disclosed above are implemented as a computer program 365 to be executed by the at least one processor 350 at least one of the instructions may in alternative embodiments be implemented at least partly as hardware circuits. Alternatively, the computer program may be stored on a server or any other entity connected to the communications network to which the control node 100 has access via its communications interface 370. The computer program may than be downloaded from the server into the at least one memory 360, carried by an electronic signal, optical signal, or radio signal.

It will be appreciated that additional advantages and modifications will readily occur to those skilled in the art. Therefore, the disclosures presented herein, and broader aspects thereof are not limited to the specific details and representative embodiments shown and described herein. Accordingly, many modifications, equivalents, and improvements may be included without departing from the spirit or scope of the general inventive concept as defined by the appended claims and their equivalents.

## Claims

1. A method for communication in a machine tool system (10), wherein the machine tool system (10) comprises a **N**umerical **C**ontrol NC (104) and a control node (100), wherein the control node (100) and the NC (104) are configured to exchange data signals with each other, wherein the method comprises
- transmitting, from the control node (100) to the NC (104), a data signal comprising an action request (200) which comprises an acknowledgment indication;
- triggering, in the NC (104), an action to be performed in the machine tool system (10) based on the received action request, and
- sending, from the NC (104) to the control node (100), an acknowledgement ACK data signal (300) if required by the acknowledgement indication.

2. The method according to claim 1, wherein the machine tool system (10) further comprises a Programmable Logic Controller, PLC (102), which comprises an interface configured to relay data signals between the control node (100) and the NC (104).

3. The method according to any of the preceding claims, wherein the acknowledgement ACK data signal comprises data indicating that the action is active, the method further comprising:
- resetting the action request (200), at the control node (100), after receiving the acknowledgement ACK data signal (300).

4. The method according to claim 1, further comprising:
- resetting the action request (200), at the control node (100), after a predetermined period, if the acknowledgement indication does not require the acknowledgement ACK data signal (201).

5. The method according to any of the preceding claims, wherein the action request comprises an action type (201) identifying an action to be performed and an action value (203) instructing the way the action is to be executed, the method further comprising:
- setting the action value (203) before setting the action type (201).

6. The method according to claim 1 or 2 wherein the control node (100) and the NC (104) are further configured to exchange a status request.

7. The method according to claim 6, wherein the status request relates to at least one of:
- changing parameters of a working state of a cutting tool connected to the machine tool system,
- a working state of the cutting tool, or
- a working state of a machine tool.

8. A machine tool system (10) comprising:
a Numerical Control NC (104); and
a control node (100); wherein
the control node (100) and the NC (104) are configured to exchange data signals with each other, wherein the machine tool system is configured to cause:
- the control node (100) to transmit a data signal to the NC (104), the data signal comprising an action request which comprises an acknowledgment indication;
- the NC (104) to trigger an action to be performed in the machine tool system based on the received action request (200), and
- the NC (104) to send an acknowledgement ACK data signal (300) to the control node (100) if required by the acknowledgement indication.

9. The machine tool system according to claim 8, wherein the action request (200) includes an action type (201) identifying an action to be performed and an action value (203) instructing the way the action is to be executed, wherein the action value (203) is set before the action type (201).

10. The machine tool system according to claim 8, wherein the control node (100) and the NC (104) are further configured to exchange a status request.

11. The machine tool system according to claim 10, wherein the status request relates to at least one of:
- changing parameters of the working state of a cutting tool connected to the machine tool system,
- the working state of the cutting tool, or
- the working state of the machine tool.

12. A method performed at a control node (100) for communication with a Numerical Control NC (104) in a machine tool system (10), comprising the steps of:
- transmitting a first data signal to the NC (104), the data signal including an indication whether an acknowledgement ACK data signal is required or not;
- receiving, from the NC (104), an acknowledgement ACK data signal (300) if the first data signal (200) requires an acknowledgement; and
- transmitting a second data signal to the NC (104) when the acknowledgement ACK data signal has been received by the control node, or, if the first data signal does not require an acknowledgement, after a predefined period.

13. A method performed at a Numerical control NC (104) for communication with a control node (100) in a machine tool system (10), comprising the steps of:
- receiving a first data signal from the control node (100), the data signal including an indication whether an acknowledgement ACK data signal is required or not;
- sending an acknowledgement ACK data signal to the control node (100) if the first data signal requires an acknowledgement; and
- receiving a second data signal from the control node (100).

14. A method performed at a Programmable Logic Controller for communication in a machine tool system (10), wherein the machine tool system (10) comprises the Programmable Logic Controller PLC (102), a Numerical Control NC (104) and a control node (100), wherein the PLC (102) comprises an interface configured to relay data signals between the control node (100) and the NC (104), comprising the steps of:
- receiving, from a sending node, a data signal including an indication whether an acknowledgement ACK data signal is required or not;
- relaying the data signal to a receiving node and, if the data signal requires an acknowledgement:
- receiving an acknowledgement ACK data signal (201) from the receiving node, and
- relaying the acknowledgement ACK data signal to the sending node, wherein, if the sending node is the control node (100), the receiving node is the NC (104), and if the sending node is the NC (104), the receiving node is the control node (100).

15. A control node (100) for communication with a Numerical Control NC (104) in a machine tool system (10), wherein the control node (100) is configured with a transmitting unit (1001) and a receiving unit (1003), wherein
the transmitting unit (1001) is configured to transmit a first data signal to the NC (104), the data signal including an indication whether an acknowledgement ACK data signal is required or not,
the receiving unit (1003) is configured to receive, from the NC (104), an acknowledgement ACK data signal (300) if the first data signal (200) requires an acknowledgement, and
the transmitting unit (1001) is further configured to transmit a second data signal to the NC (104) when the acknowledgement ACK data signal has been received by the control node, or, if the first data signal does not require an acknowledgement, after a predefined period.

16. A Numerical Control NC (104) for communication with a control node (100) in a machine tool system (10), wherein the NC (104) is configured with a NC transmitting unit (1041) and a NC receiving unit (1043), wherein
the NC receiving unit (1043) is configured to receive a first data signal from the control node (100), the data signal including an indication whether an acknowledgement ACK data signal is required or not,
the NC transmitting unit (1041) is configured to send an acknowledgement ACK data signal to the control node (100) if the first data signal requires an acknowledgement, and
the NC receiving unit (1043) is further configured to receive a second data signal from the control node (100).

17. A Programmable Logic Controller PLC (102) for communication in a machine tool system (10), wherein the machine tool system (10) comprises the Programmable Logic Controller PLC (102), a Numerical Control NC (104) and a control node (100), wherein the PLC (102) is configured with a PLC receiving unit (1021) and an interface configured to relay data signals between the control node (100) and the NC (104), wherein
the PLC receiving unit (1021) is configured to receive, from a sending node, a data signal including an indication whether an acknowledgement ACK data signal is required or not;
the interface is configured to relay the data signal to a receiving node, and, if the data signal requires an acknowledgement,
the PLC receiving unit (1021) is further configured to receive an acknowledgement ACK data signal (201) from the receiving node, and
the interface is further configured to relay the acknowledgement ACK data
signal to the sending node,
wherein, if the sending node is the control node (100), the receiving node is the NC (104), and if the sending node is the NC (104), the receiving node is the control node (100).

18. A computer program product comprising computer-readable instructions which, when executed on a computer, performs a method according to any of the claims 1-7.
